# EUROPEAN PATENT SPECIFICATION

(11) **EP 3 311 035 B1**
(45) Date of publication and mention of the grant of the patent: **22.07.2020**
(21) Application number: 16738892.5
(22) Date of filing: 16.06.2016
(51) Int. Cl.: F15B 11/05, A01B 63/10, A01B 63/22, A01B 63/32, F15B 11/16, A01B 63/112

(54) **AGRICULTURAL IMPLEMENT AND METHOD OF SUPPLYING HYDRAULIC POWER TO AN AGRICULTURAL IMPLEMENT**
LANDWIRTSCHAFTLICHE ARBEITSMASCHINE UND VERFAHREN ZUR LIEFERUNG VON HYDRAULISCHER KRAFT AN DIE LANDWIRTSCHAFTLICHE ARBEITSMASCHINE
OUTILLAGE AGRICOLE ET PROCÉDÉ DE FOURNITURE DE FORCE HYDRAULIQUE À L'OUTILLAGE AGRICOLE

(30) Priority: 18.06.2015 SE 1550854
(43) Date of publication of application: 25.04.2018
(73) Proprietor: Väderstad Holding AB, 590 21 Väderstad (SE)
(72) Inventor: SÖDERBERG, Johan, 583 36 Linköping (SE); NILSSON, Anders, 595 92 Mjölby (SE)
(74) Representative: AWA Sweden AB
(86) International application number: PCT/SE2016/050587
(87) International publication number: WO 2016/204685

(56) References cited:
- EP-A1- 1 338 934
- EP-A1- 2 840 261
- EP-A2- 2 650 548
- DE-U1-202008 007 912

## Description

### Technical domain

This document relates to an agricultural implement which is to be supplied with hydraulic power via a load sensing system, known as an "LS system", from a traction vehicle, and to a method of supplying hydraulic power to an agricultural implement.

### Background

It is known to utilise load sensing systems, known as "LS systems" for supplying hydraulic power from a traction vehicle to an agricultural implement being pulled by a traction vehicle which has one or more hydraulically operated functions.

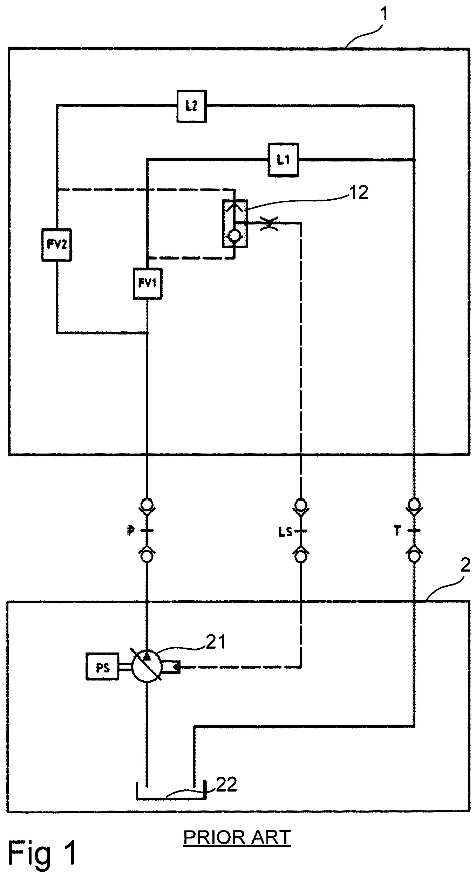

Fig. 1 shows such a system, comprising an agricultural implement 1 which has two loads L1, L2 which can be constituted by hydraulic cylinders for lowering frame sections of the agricultural implement or for setting a working depth, or by hydraulic motors for operating feeder equipment for sowing seeds, for example, or for operating a blower, pump or suchlike.

The LS system comprises, in the traction vehicle 2, a variable pump 21, a reservoir 22 for hydraulic fluid and a power source PS which can be a combustion engine or an electric motor. The pump can be a hydraulic pump with variable displacement. The LS system comprises three lines: a feed line P, a return line T and a load-sensing line LS. Via the feed line P, hydraulic fluid is fed from the reservoir 22 via the pump 21 to the agricultural implement 1.

Via the return line T the hydraulic fluid is returned from the agricultural implement 1 to the reservoir 22.

Via the load-sensing lead LS and a valve 12 a hydraulic measuring signal is produced, which can, for example, indicate a maximum occurring pressure at a point in the hydraulic system of the agricultural implement 1. With the aid of the measuring signal the operation of the pump is controlled so that a predetermined pressure is maintained.

LS systems have the advantage that several functions, here represented by function valves FV1, FV2 and loads L1 and L2 operated by them, can be supplied with a small number of lines between the traction vehicle and the agricultural implement, wherein the supply from the pump 21 via the feed line P is automatically adjusted in relation to the agricultural implement's requirements as a whole. As a non-restrictive example, the function valves can be manually- controlled valves, electrically-controlled valves, pneumatically-controlled valves or hydraulically-controlled valves.

EP1338934A1 discloses a method of controlling agricultural working machines.

It has, however, been seen that the function which LS systems theoretically provide is not always achieved. For example, leakage, wear and/or friction (line losses) result in the signal on the load-sensing line LS not being strong or stable enough to provide the correct control effect on the pump 21. In addition to this, there are certain variations between different tractor makes and/or tractor models, which means that a particular signal of the load-sensing line LS has different effects on different tractors.

It is also of interest to improve the energy efficiency of the equipage comprising the agricultural implement.

There is therefore a requirement for an agricultural implement which is improved in at least some of the above respects.

### Summary

One aim is therefore to provide an improved agricultural implement. Specific aims include providing an agricultural implement which is less sensitive to leakage, wear and/or friction (line losses) in the hydraulic system and/or which more probably is fully functional with tractors of different makes or models. A further aim is to improve the energy efficiency of the outfit comprising the agricultural implement.

The invention is defined by the attached independent claim. Forms of embodiment are evident from the attached dependent claim, the following description and the attached drawings.

According to a first aspect, an agricultural implement (1', 1") is provided which has at least one hydraulically activated function, said agricultural implement comprising an incoming feed line for hydraulic fluid, an outgoing return line for hydraulic fluid and an outgoing load-sensing line. The agricultural implement also comprise a sensor device for detecting a pressure in relation to the hydraulically-operated function and/or in relation to the load-sensing line, a regulating device which is hydraulically connected to the load-sensing line and to at least one of the feed line or return line, and a control unit which is arranged to receive a signal from the sensor device and to control the regulating device to provide a predetermined pressure and/or flow on the load-sensing line.

Here, an "agricultural implement" primarily refers to an arbitrary device for use in agriculture. More specifically if refers to soil-working agricultural implements, which includes ploughs, harrows, cultivators and sowing machines as well as combinations thereof.

"Hydraulically activated function" refers to such functions that are activated, controlled or driven by way of supplying hydraulic fluid, for example hydraulic oil. Non-restrictive examples of such functions include hydraulic cylinders for extending and/or retracting frame sections of the agricultural implement, hydraulic cylinders for setting, for example, working depths, and hydraulically-driven motors for blowers or feeding out devices. A hydraulically-operated function can be controlled manually (i.e. with aid of a lever or button), hydraulically, electrically or pneumatically.

"In relation to" the hydraulically-operated function and/or or load-sensing line is taken to mean a placement of the sensor so that the pressure detected in it is the same pressure as a pressure detected directly in relation to the hydraulically operated function and/or load-sensing line, excluding line losses.

The predetermined pressure and/or flow can be given by a user or calculated in a suitable manner depending on the circumstances. The predetermined pressure or flow can be given as a single value or as a value interval. The predetermined pressure and/or flow can vary over time.

A pressure is taken to mean at least one pressure, for example one or several pressures can be detected in relation to the hydraulically activated function and/or in relation to the load-sensing line.

By bringing about a predetermined pressure and/or flow on the load-sensing line with the aid of feeding to/from the feed line and/or return line, it is possible (to the extent permitted by the feed line and/or return line) to create a predetermined, and preferably stable, pressure and/or flow on the load-sensing line, irrespective of any leakage, wear or variations between different type of traction vehicles. Additionally increased energy efficiency of the equipage as a whole is achieved in that it is ensured that only as much pressure and/or flow is provided by that the traction vehicle pump as is required by the agricultural implement.

The agricultural implement can also comprise at least one function valve which is connected to the feed line for activating a first load. "Functional valve" is taken to mean a valve for a hydraulically activated function. As stated above, such a valve can be a manually, electrically, hydraulically or pneumatically controlled valve. The load can, for example, be an aforementioned hydraulic cylinder or motor.

The agricultural implement can also comprise a first sensor upstream of the function valve and a second sensor downstream of the function valve. The sensor can, but does not have to be, of the same type.

One or more sensors can form part of a sensor device which can also comprise signal lines and/or transmitters/receivers, amplifiers and signal processing systems, possibly memories and interfaces for communication with other units.

The sensor device can be set up to sense a pressure in relation to the hydraulically activated function and/or in relation to the load-sensing line, and the control system can be set up to control said pressure and/or flow on the load-sensing line so that a predetermined pressure and/or flow is brought about on the load-sensing line.

The sensor device can be set up to sense a pressure difference over the function valve and the control system can be set up to control said pressure and/or flow on the load-sensing line so that a predetermined pressure difference is maintained.

The predetermined pressure difference can be given by a user or calculated in a suitable manner depending on the circumstances. The predetermined pressure difference can be given as a single value or as a value interval. The predetermined pressure difference can vary over time.

The sensor device can comprise an LS pressure sensor downstream of the regulating device for detecting a pressure brought about in a load-sensing line, and the control device can be set up to control said pressure and/or flow on the load-sensing line so that a predetermined pressure and/or flow is brought about on the load-sensing line.

As the pump does not only have a hydraulic effect on the agricultural implement but also functions on the traction vehicle, such as steering, braking, front lifting device etc., the pump pressure can be changed, for example it can increase, due to reasons other than being brought about through a signal on the load-sensing line. This can lead to problems for the control unit as it can be made to change the pressure and/or flow on the load-sensing line, not as a result of changed conditions on the agricultural implement, but as a result of a circumstance on the traction vehicle. This can in turn lead to undesirable variations in pressure and/or flow in the load-sensing line and thereby also the supply to the agricultural implement.

By utilising a signal corresponding to a pressure and/or flow in the load-sensing line it is ensured that the correct load sensor signal is brought about and that this is not changed by a wrong cause.

At least one of said first and second sensors can be set up to produce a hydraulic signal for the control unit.

Alternatively or additionally at least one of said first and second sensors can be set up to produce an electrical signal for the control unit.

The regulating device can be connected to both the feed line and the return line.

The control system can be set up to control the pressure and/or flow on the load-sensing line in order to provide a predetermined pressure in relation to the hydraulically activated function. The control unit can be a hydraulic or electric control unit.

The agricultural implement can also comprise a second hydraulically activated function and a second sensor device for detecting a second pressure in relation to the second hydraulically activated function, wherein the control unit can be set up to receive a second signal from the second sensor device and to control the pressure and/or flow on the load-sensing line also based on the second signal.

According to a second aspect a method of supplying hydraulic power to an agricultural implement is brought about. The method comprises supplying via a feed line pressurised hydraulic fluid to the agricultural implement from a hydraulic drive system to at least one hydraulically activated function, via a return line returning the hydraulic fluid to the hydraulic drive system, and via a load-sensing line sending a signal pressure back for controlling the hydraulic drive system. The method also comprises measuring a pressure in relation to the hydraulically activated function and through a hydraulic connection between the feed line and/or the return line and the load-sensing line controlling a pressure and/or flow on the load-sensing line based on the measured pressure.

The method can also comprise measuring a pressure difference over a function valve and controlling said pressure and/or flow on the load-sensing line based on the measured pressure difference.

The method can also comprise detecting a pressure and/or flow on the load-sensing line and controlling said pressure and/or flow on the load-sensing line so that a predetermined pressure and/or flow is brought about on the load-sensing line.

The method can also comprise measuring a second pressure in relation to a second hydraulically activated function and controlling the pressure and/or flow on the load-sensing line also based on the second pressure.

### Brief description of the drawings

Fig. 1 is a schematic block diagram of an agricultural implement 1, which, in a known manner, is supplied with hydraulic power via an LS system from a traction vehicle 2.
Fig. 2 is a schematic block diagram of an agricultural implement 1', which is supplied with hydraulic power via an LS system from a traction vehicle 2.
Fig. 3 is a schematic block diagram of an agricultural implement 1", which is supplied with hydraulic power via an LS system from a traction vehicle 2.
Fig. 4 is a schematic block diagram of an agricultural implement 1''', with functions corresponding to the ones shown in fig. 2 which is supplied with hydraulic power via an LS system from a traction vehicle 2.
Fig. 5 is a schematic block diagram of an agricultural implement 1^{IV} with functions corresponding to the ones shown in fig. 3 which is supplied with hydraulic power via an LS system from a traction vehicle 2.

### Detailed description

In the following, components which are identical in the different drawings are designated with the same reference symbols throughout. For a description of the structure and functions of the traction vehicle 2, reference to the description of fig. 1 is made.

The agricultural implement 1, 1', 1" can be a soil-working agricultural implement such as a harrow, a plough, a cultivator and sowing machine or a combination thereof.

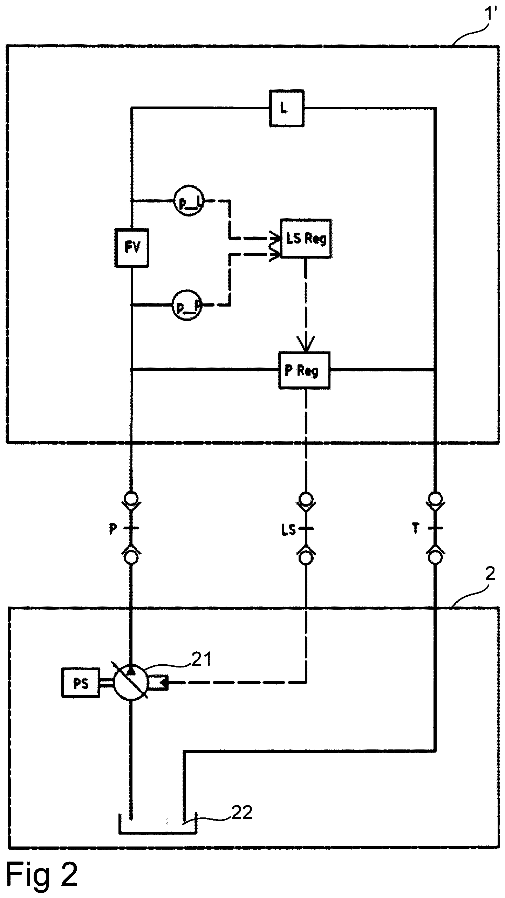

With reference to fig. 2, the agricultural implement 1' comprises a load, which can be of a type such as described above. The agricultural implement 1' comprises a function valve FV, which can be of a type such as described above.

A first pressure sensor p_P for measuring a pressure upstream of the function valve FV is connected between the feed line P and function valve FV.

A second pressure sensor p_L for measuring a pressure downstream of the function valve FV is connected between the function valve and load.

The pressure sensors p_P, p_L can be of a type which provides a signal of discretionary type, e.g. electrical or hydraulic.

The pressure sensors p_P, p_L are connected to a control unit LSreg which receives signals from the pressure sensors and brings about a control signal to a pressure regulating systemPreg.

The control unit LSreg can be an electronic control unit which receives signals from the pressure sensors p_P, p_L, calculates a pressure difference Δp over the function valve FV and produces the control signal depending on the pressure difference Δp. Alternatively the control unit can be a fully or partially hydraulic or pneumatically activated control unit.

According to one embodiment, the pressure sensors p_P, p_L can generate electrical signals to the control unit and the control unit LSreg can provide a hydraulic or electrical signal to the pressure regulating system Preg.

According another embodiment, the pressure sensors p_P, p_L can generate hydraulic signals to the control unit and the control unit LSreg can provide a hydraulic or electrical signal to the pressure regulating system Preg.

The pressure-regulating device Preg can be connected to the feed line P and/or to the return line T via respective valves (not shown) so that the pressure on the load-sensing line LS can be controlled freely based on the control signal from the control unit LSreg. The pressure-regulating device comprises a regulator which ensures that the correct pressure and/or flow is sent to internal regulators of the pump 21 and can for example consist of a pressure-limiting valve or a pressure-reducing/relieving valve which hydraulically or electrically controlled.

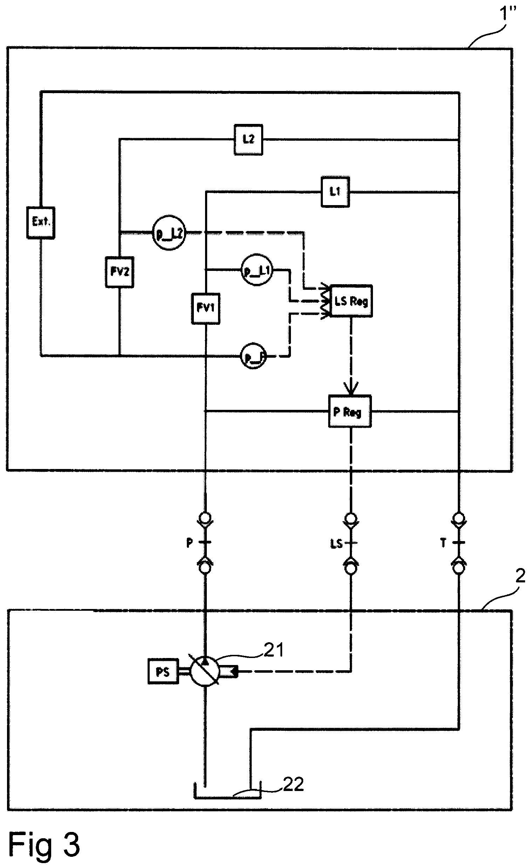

With reference to fig. 3, an embodiment is shown in which the agricultural implement 1" has two function valves FV1, FV2 which each control a respective load L1, L2.

A first pressure sensor p_P is, as in fig, 2, connected between the feed line P and function valve FV for measuring a pressure upstream of the function valve FV.

A second pressure sensor p_L1 is connected between the first function valve and the first load L1 for measuring a pressure downstream of the function valve FV1.

A third pressure sensor p_L2 is connected between the second function valve and the second load L2 for measuring a pressure downstream of the function valve FV2.

All the pressure sensors p_P, p_L1, p_L2 are connected to the control unit LSreg which function in the same way as set out with reference to fig. 2.

The pressure-regulating device Preg in fig. 3 also functions in the same way as set out with reference to fig. 2.

Fig. 3 also shows how an additional load Ext, which can be a function that does not require continuous LS regulation, such as a raising/lowering function of the agricultural implement, can be connected to the agricultural implement's hydraulic system. This further load EXT which is thus not controlled continuously like the other loads L1, L2, can temporarily require a greater pressure and/or load than that provided by continuous regulation via the control unit LSreg.

For example, activation of such an additional load can be combined with a signal to the control unit LSreg or to the pressure regulating device Preg, which results in a signal on the load-sensing line LS which brings about a temporary increase in pressure and/or flow on the feed line P.

Such a signal can be produced during a predetermined period of time. Alternatively such a signal can be brought about continuously until a second signal is produced which makes the system return to normal pressure and/or flow. The signal can be based on information from the agricultural implement's overall control system, for example in connection with activation of the raising or lowering of tools etc.

It can be seen that in a manner analogue to that shown in fig. 3 any number of controlled or external loads can be added.

When two or more loads are present, the control unit LSreg and the pressure-regulating device Preg can take into consideration the load which requires the highest pressure and/or flow and control the pressure on the load-sensing line LS based on this.

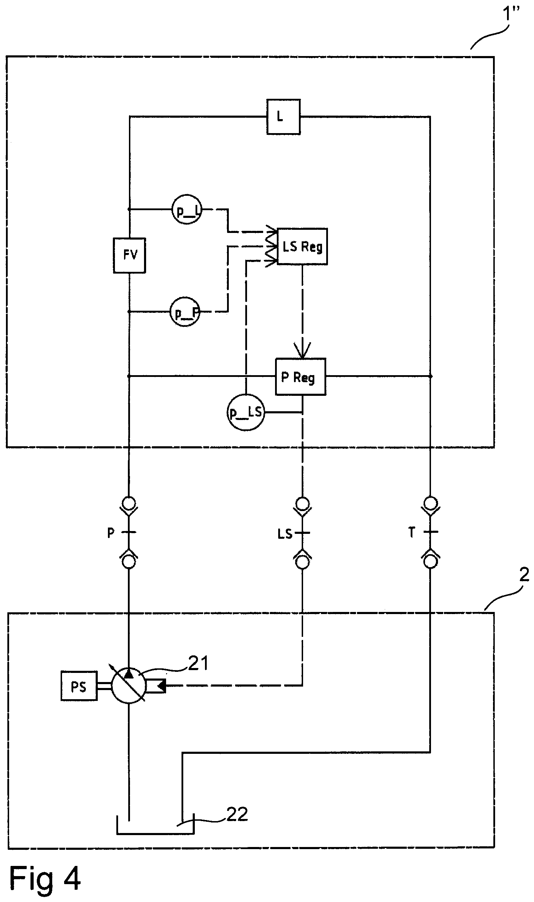

Fig. 4 shows an embodiment corresponding to that in fig. 2 but with one further function: a pressure sensor p_LS which is arranged to detect the pressure in the load-sensing line LS and to provide a corresponding signal to the control unit LSreg. The control unit LSreg can thus also produce the control signal to the pressure-regulating device based on the pressure measured in the load-sensing line LS.

Preferably the pressure sensor p_LS is set up to measure the pressure in the load-sensing line LS downstream of the pressure regulator and upstream of a coupling device for connecting to the traction vehicle 2.

The control unit LSreg can determine whether the signal from the pressure sensor p_LS corresponds to the value set by the control unit.

By also utilising a signal corresponding to the pressure in the load-sensing line LS, it is possible to ensure that a signal output on the load-sensing line LS is not affected by a pressure increase in the pump 21 brought about through a changed condition on the traction vehicle 2.

In this way a more stable signal can be produced on the load-sensing line which reduces the risk of unwanted fluctuations in pressure and/or flow in the system.

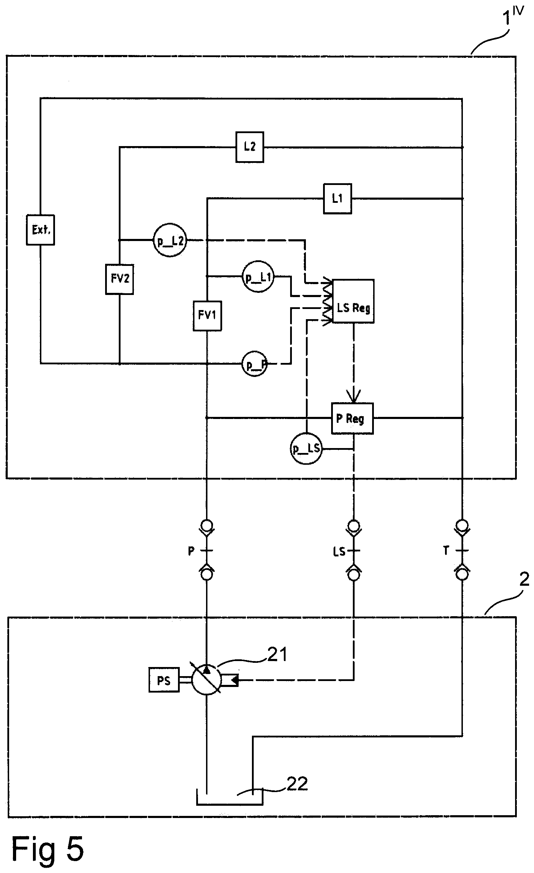

Fig. 5 shows an embodiment corresponding to that in fig. 3 but with one further function: a pressure sensor p_LS which is arranged to detect the pressure in the load-sensing line LS and to provide a corresponding signal to the control unit LSreg in the same way was described with reference to fig. 4.

It is also possible to utilise the pressure sensors p_LS on the load-sensing line LS in an embodiment without sensors p_L, p_L1, p_L2 for detecting a delta pressure, for example when there is only one external load Ext. In such a system the pressure sensor p_LS on the load-sensing line LS ensures that the correct signal is being sent to the pump through control in such a way that an expected value is received back. The pressure-regulator device Preg regulates the pressure based on the detected delta pressure and to achieve the desired pressure and/or flow. The signal for the desired value comes from the agricultural implement's overall control system, generated, for example, by an input from a user.

As a further alternative the sensor p_P which measures the pressure in the feed line P can be discarded, whereby the pressure is only measured after the relevant function valve, i.e. p_L, p_L1, p_L2 and on the load-sensing line, at p_LS. This brings about measurement which is independent of the tractor's pump.

## Claims

1. Agricultural implement (1', 1") which has at least one hydraulically activated function, supplied with hydraulic power via an LS system from a traction vehicle (2), said agricultural implement comprising:
an incoming feed line (P) for hydraulic fluid,
an outgoing return line (T) for the hydraulic fluid and
an outgoing load-sensing line (LS),
**characterised by**
a sensor device (p_P, p_L, p_L1, p_L2, p_LS) for detecting a pressure in relation to the hydraulically activated function and/or in relation to the load-sensing line (LS),
a regulating device (Preg) which is hydraulically connected to the load-sensing line (LS) and to at least one of the feed line (P) and return line (T), and
a control unit (LSreg) which is arranged to receive a signal from the sensor device (p_P, p_L, p_L1, p_L2, p_LS) and to control the regulating device (Preg) to provide a predetermined pressure and/or flow on the load-sensing line (LS).

2. Agricultural implement according to claim 1 also comprising at least one function valve (FV, FV1, FV2) which is connected to the feed line for operating a first load (L, L1, L2).

3. Agricultural implement according to claim 2 wherein the sensor device comprises a first sensor (p_P) upstream of the function valve (FV, FV1, FV2) and a second sensor (p_L, p_L1, p_L2) downstream of the function valve (FV, FV1, FV2).

4. Agricultural implement according to claim 2 or 3, wherein the sensor device (p_P, p_L, p_L1, p_L2) is set up to detect a pressure difference (Δp) over the function valve (FV, FV1, FV2), wherein the control system (LSreg) is set up to control said pressure and/or flow on the load-sensing line (LS) so that a predetermined pressure difference (Δp) is maintained.

5. Agricultural implement according to any one of previous claims wherein the agricultural implement comprises an LS pressure sensor (p_LS) downstream of the regulator device (Preg) for detecting a pressure brought about in a load-sensing line (LS), and the control device (LSreg) is set up to control said pressure and/or flow on the load-sensing line so that a predetermined pressure and/or flow is brought about on the load-sensing line (LS).

6. Agricultural implement according to any one of previous claims wherein at least one of said first and second sensors (p_P, p_L, p_L1, p_L2) is set up to send a hydraulic signal to the control unit (LSreg).

7. Agricultural implement according to any one of claims 1-4 wherein at least one of said first and second sensors (p_P, p_L, p_L1, p_L2) is set up to send an electrical signal to the control unit (LSreg).

8. Agricultural implement according to any one of previous claims wherein the regulating device (Preg) is connected to both the feed line (P) and the return line (T).

9. Agricultural implement according to any one of previous claims wherein the control system (LSreg) is be set up to control the pressure and/or flow on the load-sensing line in order to provide a predetermined pressure in relation to the hydraulically activated function.

10. Agricultural implement according to any one of previous claims, also comprising:
a second hydraulically activated function and
a second sensor device for detecting a second pressure in relation to the second hydraulically activated function,
wherein the control unit (LSreg) is set up to receive a second signal from the second sensor device and to control the pressure and/or flow on the load-sensing line (LS) also based on the second signal.

11. Method of supplying hydraulic power via an LS system, from a traction vehicle to an agricultural implement comprising:
supplying via a feed line (P) pressurised hydraulic fluid to the agricultural implement (1', 1") from a hydraulic drive system (21) to at least one hydraulically activated function,
returning the hydraulic fluid via a return line to the hydraulic drive system (21), and
via a load-sensing line (LS) returning a signal pressure for controlling the hydraulic drive system (21) and/or to a hydraulic fluid reservoir,
**characterised by**
measuring at least one pressure in relation to the hydraulically activated function and
through a hydraulic connection between the feed line (P) and/or the return line (T) and load-sensing line (LS) controlling a pressure and/or flow on the load-sensing line (LS) based on the measured pressure.

12. Method according to claim 11, also comprising
measuring a pressure difference (Δp) over a function valve (FV, FV1, FV2), and
controlling said pressure and/or flow on the load-sensing line (LS) based on the measured pressure difference (Δp).

13. Method according to claim 11 or 12, also comprising
measuring a pressure and/or flow on the load-sensing line (LS) and
controlling said pressure and/or flow on the load-sensing line (LS) so that a predetermined pressure and/or flow is brought about on the load-sensing line (LS).

14. Method according to any one of claims 11-13, also comprising:
measuring a second pressure in relation to a second hydraulically operated function and
controlling the pressure and/or flow on the load-sensing line (LS) based also on the second pressure.

## Patentansprüche

1. Landwirtschaftliches Gerät (1', 1"), das mindestens eine hydraulisch aktivierte Funktion hat, wobei die Hydraulikleistung durch ein LS System von einem Triebfahrzeuggeliefert wird, wobei genanntes landwirtschaftliche Gerät umfasst:
eine eingehende Zuleitung (P) für Hydraulikflüssigkeit,
eine abgehende Rücklaufleitung (T) für die Hydraulikflüssigkeit und
eine abgehende Lasterfassungsleitung (LS),
**gekennzeichnet durch**
eine Sensorvorrichtung (p_P, p_L, p_L1, p_L2, p_LS) zur Erfassung eines Drucks in Bezug auf die hydraulisch aktivierte Funktion und/ oder in Bezug auf die Lasterfassungsleitung (LS),
eine Regelvorrichtung (Preg), die hydraulisch mit der Lasterfassungsleitung (LS) und mit mindestens einer der Zuleitungen (P) und Rücklaufleitung (T) und
einer Steuereinheit (LSreg) verbunden ist, die so angeordnet ist, dass sie ein Signal von der Sensorvorrichtung (p_P, p_L, p_L1, p_L2, p_LS) empfängt und zum Steuern der Regelvorrichtung (Preg), um einen vorbestimmten Druck und/ oder Durchfluss zur der Lasterfassungsleitung (LS) bereitzustellen.

2. Landwirtschaftliches Gerät nach Anspruch 1, das auch mindestens ein Funktionsventil (FV, FV1, FV2), das mit der Zuleitung zum Betreiben einer ersten Last (L, L1, L2) verbunden ist, umfasst.

3. Landwirtschaftliches Gerät nach Anspruch 2, wobei die Sensorvorrichtung einen ersten Sensor (p_P) stromaufwärts des Funktionsventils (FV, FV1, FV2) und einen zweiten Sensor (p_L, p_L1, p_L2) stromabwärts des Funktionsventils (FV, FV1, FV2) umfasst.

4. Landwirtschaftliches Gerät nach Anspruch 2 oder 3, wobei die Sensorvorrichtung (p_P, p_L, p_L1, p_L2) eingerichtet ist, um eine Druckdifferenz (Δp) über dem Funktionsventil (FV, FV1, FV2) zu erfassen, wobei das Steuersystem (LSreg) eingerichtet ist, um genannten Druck und/ oder Durchfluss auf der Lasterfassungsleitung (LS) so zu steuern, dass eine vorbestimmte Druckdifferenz (Δp) aufrechterhalten wird.

5. Landwirtschaftliches Gerät nach einem der vorhergehenden Ansprüche, wobei das landwirtschaftliche Gerät einen LS-Drucksensor (p_LS) stromabwärts der Regelvorrichtung (Preg) zum Erfassen eines Druckes, der in einer Lasterfassungsleitung (LS) hervorgerufenen wird, und die Steuervorrichtung (LSreg), die eingerichtet ist, um genannten Druck und/ oder Durchfluss auf der Lasterfassungsleitung zu steuern, so dass ein vorbestimmter Druck und/ oder Durchfluss auf der Lasterfassungsleitung g (LS) hervorgerufen wird, umfasst.

6. Landwirtschaftliches Gerät nach einem der vorhergehenden Ansprüche, wobei mindestens einer der genannten ersten und zweiten Sensoren (p_P, p_L, p_L1, p_L2) eingerichtet ist, um ein hydraulisches Signal an die Steuereinheit (LSreg) zu senden.

7. Landwirtschaftliches Gerät nach einem der Ansprüche 1 - 4, wobei mindestens einer der genannten ersten und zweiten Sensoren (p_P, p_L, p_L1, p_L2) eingerichtet ist, um ein elektrisches Signal an die Steuereinheit (LSreg) zu senden.

8. Landwirtschaftliches Gerät nach einem der vorhergehenden Ansprüche, wobei die Regelvorrichtung (Preg) sowohl mit der Zuleitung (P) als auch mit der Rücklaufleitung (T) verbunden ist.

9. Landwirtschaftliches Gerät nach einem der vorhergehenden Ansprüche, wobei das Steuersystem (LSreg) so eingerichtet ist, dass es den Druck und/ oder den Durchfluss auf der Lasterfassungsleitung steuert, um einen vorbestimmten Druck in Bezug auf die hydraulisch aktivierte Funktion bereitzustellen.

10. Landwirtschaftliches Gerät nach einem der vorhergehenden Ansprüche, ferner umfassend:
eine zweite hydraulisch aktivierte Funktion und
eine zweite Sensorvorrichtung zum Erfassen eines zweiten Drucks in Bezug auf die zweite hydraulisch aktivierte Funktion,
wobei die Steuereinheit (LSreg) eingerichtet ist, um ein zweites Signal von der zweiten Sensorvorrichtung zu empfangen und den Druck und/ oder Durchflusses auf der Lasterfassungsleitung (LS) ebenfalls basierend auf dem zweiten Signal zu steuern.

11. Verfahren zur Lieferung von Hydraulikleistung von einem Triebfahrzeuggeliefert durch ein LS System an ein landwirtschaftliches Gerät, umfassend:
Zuführen von unter Druck stehender Hydraulikflüssigkeit über eine Zuleitung (P) an das landwirtschaftliche Gerät (1', 1") von einem hydraulischen Antriebssystem (21) zu mindestens einer hydraulisch aktivierten Funktion,
Rückleiten der Hydraulikflüssigkeit über eine Rücklaufleitung zum Hydraulikantriebssystem (21) und
durch eine Lasterfassungsleitung (LS), die einen Signaldruck zur Steuerung des Hydraulikantriebssystems (21) und/oder an einen Behälter der Hydraulikflüssigkeit zurückgibt,
**gekennzeichnet durch**
Messen von mindestens einem Druck in Bezug auf die hydraulisch aktivierte Funktion und
Steuern eines Drucks und/ oder Durchflusses zu der Lasterfassungsleitung (LS) basierend auf dem gemessenen Druck durch eine hydraulische Verbindung zwischen der Zuleitung (P) und/ oder der Rücklaufleitung (T) und der Lasterfassungsleitung (LS).

12. Verfahren nach Anspruch 11, das weiter das Messen einer Druckdifferenz (Δp) über ein Funktionsventil (FV, FV1, FV2) und Steuern des Drucks und/ oder Durchflusses auf der Lasterfassungsleitung (LS) basierend auf der gemessenen Druckdifferenz (Δp) umfasst.

13. Verfahren nach Anspruch 11 oder 12, das auch das Messen eines Drucks und/ oder Durchflusses auf der Lasterfassungsleitung (LS) und das Steuern des Drucks und/ oder des Durchflusses auf der Lasterfassungsleitung (LS), so dass ein vorbestimmter Druck und/ oder ein Durchfluss auf der Lasterfassungsleitung (LS) erzeugt wird, umfasst.

14. Verfahren nach einem der Ansprüche 1 - 13, das weiter das Messen eines zweiten Drucks in Bezug auf eine zweite hydraulisch betätigte Funktion und das Steuern des Drucks und/ oder des Durchflusses auf der Lasterfassungsleitung (LS) basierend auf dem zweiten Druck umfasst.

## Revendications

1. Outillage agricole (1', 1") qui a au moins une fonction activée hydrauliquement, alimenté en puissance hydraulique via un système LS depuis un véhicule de traction (2), ledit outillage agricole comprenant :
une alimentation entrante (P) pour du fluide hydraulique,
une ligne de retour sortante (T) pour le fluide hydraulique et
une ligne de détection de charge sortante (LS),
**caractérisé par**
un dispositif de détection (p_P, p_L, p_L1, p_L2, p_LS) pour détecter une pression en relation avec la fonction activée hydrauliquement et/ou en relation avec la ligne de détection de charge (LS),
un dispositif de régulation (Preg) qui est connecté hydrauliquement à la ligne de détection de charge (LS) et à au moins une parmi la ligne d'alimentation (P) et la ligne de retour (T), et
une unité de commande (LSreg) qui est conçue pour recevoir un signal du dispositif de détection (p_P, p_L, p_L1, p_L2, p_LS) et pour commander au dispositif de régulation (Preg) de fournir une pression et/ou un flux prédéterminé sur la ligne de détection de charge (LS).

2. Outillage agricole selon la revendication 1, comprenant également au moins une vanne fonctionnelle (FV, FV1, FV2) qui est connectée à la ligne d'alimentation pour actionner une première charge (L, L1, L2).

3. Outillage agricole selon la revendication 2, dans lequel le dispositif de détection comprend un premier capteur (p_P) en amont de la vanne fonctionnelle (FV, FV1, FV2) et un second capteur (p_L, p_L1, p_L2) en aval de la vanne fonctionnelle (FV, FV1, FV2).

4. Outillage agricole selon la revendication 2 ou 3, dans lequel le dispositif de détection (p_P, p_L, p_L1, p_L2, p_LS) est conçu pour détecter une différence de pression (Δp) sur la vanne fonctionnelle (FV, FV1, FV2), le système de commande (LSreg) est conçu pour commander ladite pression et/ou ledit flux sur la ligne de détection de charge (LS) de manière à ce qu'une différence de pression prédéterminée (Δp) soit maintenue.

5. Outillage agricole selon l'une quelconque des revendications précédentes, dans lequel l'outillage agricole comprend un détecteur de pression (p_LS) en aval du dispositif régulateur (Preg) pour détecter une pression occasionnée dans une ligne de détection de charge (LS), et le dispositif de commande (LSreg) est conçu pour commander ladite pression et/ou ledit flux sur la ligne de détection de charge de manière à ce qu'une pression et/ou un flux prédéterminé soit occasionné sur la ligne de détection de charge (LS).

6. Outillage agricole selon l'une quelconque des revendications précédentes, dans lequel au moins un desdits premier et second capteurs (p_P, p_L, p_L1, p_L2) est conçu pour envoyer un signal hydraulique à l'unité de commande (LSreg).

7. Outillage agricole selon l'une quelconque des revendications 1 à 4, dans lequel au moins un desdits premier et second capteurs (p_P, p_L, p_L, p_L1, p_L2) est conçu pour envoyer un signal électrique à l'unité de commande (LSreg)

8. Outillage agricole selon l'une quelconque des revendications précédentes, dans lequel le dispositif régulateur (Preg) est connecté à la fois à la ligne d'alimentation (P) et à la ligne de retour (T).

9. Outillage agricole selon l'une quelconque des revendications précédentes, dans lequel le système de commande (LSreg) est conçu pour commander la pression et/ou le flux sur la ligne de détection de charge afin de fournir une pression prédéterminée en relation avec la fonction activée hydrauliquement.

10. Outillage agricole selon l'une quelconque des revendications précédentes, comprenant également :
une seconde fonction activée hydrauliquement et
un second dispositif de détection pour détecter une seconde pression en relation avec la seconde fonction activée hydrauliquement,
l'unité de commande (LSreg) est conçue pour recevoir second signal du second dispositif de détection et pour commander la pression et/ou le flux sur la ligne de détection de charge (LS) en se basant également sur le second signal.

11. Procédé de fourniture de puissance hydraulique via un système LS depuis un véhicule de traction vers un outillage agricole, comprenant :
la fourniture via une ligne d'alimentation (P) de fluide hydraulique pressurisé à l'outillage agricole (1', 1") depuis un système d'entraînement hydraulique (21) à au moins une fonction activée hydrauliquement,
le retour du fluide hydraulique via une ligne de retour dans le système d'entraînement hydraulique (21), et
via une ligne de détection de charge (LS), le retour d'une pression de signal pour commander le système d'entraînement hydraulique (21) et/ou vers un réservoir de fluide hydraulique,
**caractérisé par**
la mesure d'au moins une pression en relation avec la fonction activée hydrauliquement et,
par l'intermédiaire d'une connexion hydraulique entre la ligne d'alimentation (P) et/ou la ligne de retour (T) et la ligne de détection de charge (LS), la commande d'une pression et/ou d'un flux sur la ligne de détection de charge (LS) en se basant sur la pression mesurée.

12. Procédé selon la revendication 11, comprenant également
la mesure d'une différence de pression (Δp) sur une vanne fonctionnelle (FV, FV1, FV2), et
la commande de ladite pression et/ou dudit flux sur la ligne de détection de charge (LS) en se basant sur la différence de pression mesurée (Δp).

13. Procédé selon la revendication 11 ou 12, comprenant également
la mesure d'une pression et/ou d'un flux sur la ligne de détection de charge (LS) et
la commande de ladite pression et/ou dudit flux sur la ligne de détection de charge (LS) de manière à ce qu'une pression et/ou un flux prédéterminé soit occasionné sur la ligne de détection de charge (LS).

14. Procédé selon l'une quelconque des revendications 11 à 13, comprenant également
la mesure d'une seconde pression en relation avec une seconde fonction actionnée hydrauliquement, et
la commande de la pression et/ou du flux sur la ligne de détection de charge (LS) en se basant également sur la seconde pression.
